# EUROPEAN PATENT APPLICATION

(11) **EP 4 155 961 A1**
(43) Date of publication of application: **29.03.2023**
(21) Application number: 22183217.3
(22) Date of filing: 06.07.2022
(51) Int. Cl.: G06F 15/80

(54) **MATRIX OPERATION WITH MULTIPLE TILES PER MATRIX DIMENSION**

(30) Priority: 24.09.2021 US 202117484200
(71) Applicant: INTEL Corporation, Santa Clara, CA 95054 (US)
(72) Inventor: Adelman, Menachem, 322624 Haifa, OT (IL); Gradstein, Amit, 3052316 Binyamina (IL); Rubanovich, Simon, 34792 Haifa (IL)
(74) Representative: Goddar, Heinz J.

(57) **Abstract**

An embodiment of an apparatus comprises a systolic array to perform a matrix operation on two input tiles to produce an output tile result, and circuitry coupled to the systolic array to cause the systolic array to perform respective full matrix operations on more than one tile per matrix dimension in response to a single request. Other embodiments are disclosed and claimed.

## Description

### BACKGROUND

### 1. Technical Field

This disclosure generally relates to accelerator technology, and more particularly to matrix multiplication technology for use with systolic arrays.

### 2. Background Art

In computing, a multiply-accumulate operation is a common step that computes the product of two numbers and adds that product to an accumulator. The hardware unit that performs the operation is known as a multiplier-accumulator (MAC, or MAC unit). The operation itself is also often called a MAC or a MAC operation. The MAC operation modifies an accumulator a as follows: a = a + (b x c). When done with floating point numbers, a MAC operation might be performed with two roundings, or with a single rounding. When performed with a single rounding, the MAC operation may be referred to as a fused multiply-add (FMA), or sometimes also referred to as a fused multiply-accumulate (also FMA).

INTEL ADVANCED MATRIX EXTENSIONS (INTEL AMX) is a 64-bit programming paradigm consisting of two components: a set of 2-dimensional registers (tiles) representing sub-arrays from a larger 2-dimensional memory image, and an accelerator able to operate on tiles. One implementation of the accelerator is referred to as a tile matrix multiply (TMUL) unit. The TMUL unit is conceptually a grid of FMA units able to read and write tiles.

### BRIEF DESCRIPTION OF THE DRAWINGS

The various embodiments of the present invention are illustrated by way of example, and not by way of limitation, in the figures of the accompanying drawings and in which:
FIG. 1 is a block diagram of an example of a compute system according to an embodiment;
FIG. 2 is a block diagram of another example of a compute system according to an embodiment;
FIG. 3 is a block diagram of an example of an apparatus according to an embodiment;
FIG 4. is a block diagram of another example of a compute system according to an embodiment;
FIG. 5 is a block diagram of an example of hardware according to an embodiment;
FIGs. 6A to 6B are flow diagrams of another example of a method according to an embodiment;
FIGs. 7A to 7B are flow diagrams of another example of a method according to an embodiment;
FIG. 8A is a block diagram illustrating both an exemplary in-order pipeline and an exemplary register renaming, out-of-order issue/execution pipeline according to embodiments of the invention;
FIG. 8B is a block diagram illustrating both an exemplary embodiment of an in-order architecture core and an exemplary register renaming, out-of-order issue/execution architecture core to be included in a processor according to embodiments of the invention;
FIGs. 9A-B illustrate a block diagram of a more specific exemplary in-order core architecture, which core would be one of several logic blocks (including other cores of the same type and/or different types) in a chip;
FIG. 10 is a block diagram of a processor that may have more than one core, may have an integrated memory controller, and may have integrated graphics according to embodiments of the invention;
FIGs. 11-14 are block diagrams of exemplary computer architectures; and
FIG. 15 is a block diagram contrasting the use of a software instruction converter to convert binary instructions in a source instruction set to binary instructions in a target instruction set according to embodiments of the invention.

### DETAILED DESCRIPTION

Embodiments discussed herein variously provide techniques and mechanisms for matrix operations with multiple tiles per matrix dimension. The technologies described herein may be implemented in one or more electronic devices. Non-limiting examples of electronic devices that may utilize the technologies described herein include any kind of mobile device and/or stationary device, such as cameras, cell phones, computer terminals, desktop computers, electronic readers, facsimile machines, kiosks, laptop computers, netbook computers, notebook computers, internet devices, payment terminals, personal digital assistants, media players and/or recorders, servers (e.g., blade server, rack mount server, combinations thereof, etc.), set-top boxes, smart phones, tablet personal computers, ultra-mobile personal computers, wired telephones, combinations thereof, and the like. More generally, the technologies described herein may be employed in any of a variety of electronic devices including integrated circuitry which is operable to provide a matrix operation with multiple tiles per matrix dimension.

In the following description, numerous details are discussed to provide a more thorough explanation of the embodiments of the present disclosure. It will be apparent to one skilled in the art, however, that embodiments of the present disclosure may be practiced without these specific details. In other instances, well-known structures and devices are shown in block diagram form, rather than in detail, in order to avoid obscuring embodiments of the present disclosure.

Note that in the corresponding drawings of the embodiments, signals are represented with lines. Some lines may be thicker, to indicate a greater number of constituent signal paths, and/or have arrows at one or more ends, to indicate a direction of information flow. Such indications are not intended to be limiting. Rather, the lines are used in connection with one or more exemplary embodiments to facilitate easier understanding of a circuit or a logical unit. Any represented signal, as dictated by design needs or preferences, may actually comprise one or more signals that may travel in either direction and may be implemented with any suitable type of signal scheme.

Throughout the specification, and in the claims, the term "connected" means a direct connection, such as electrical, mechanical, or magnetic connection between the things that are connected, without any intermediary devices. The term "coupled" means a direct or indirect connection, such as a direct electrical, mechanical, or magnetic connection between the things that are connected or an indirect connection, through one or more passive or active intermediary devices. The term "circuit" or "module" may refer to one or more passive and/or active components that are arranged to cooperate with one another to provide a desired function. The term "signal" may refer to at least one current signal, voltage signal, magnetic signal, or data/clock signal. The meaning of "a," "an," and "the" include plural references. The meaning of "in" includes "in" and "on."

The term "device" may generally refer to an apparatus according to the context of the usage of that term. For example, a device may refer to a stack of layers or structures, a single structure or layer, a connection of various structures having active and/or passive elements, etc. Generally, a device is a three-dimensional structure with a plane along the x-y direction and a height along the z direction of an x-y-z Cartesian coordinate system. The plane of the device may also be the plane of an apparatus which comprises the device.

The term "scaling" generally refers to converting a design (schematic and layout) from one process technology to another process technology and subsequently being reduced in layout area. The term "scaling" generally also refers to downsizing layout and devices within the same technology node. The term "scaling" may also refer to adjusting (e.g., slowing down or speeding up - i.e. scaling down, or scaling up respectively) of a signal frequency relative to another parameter, for example, power supply level.

The terms "substantially," "close," "approximately," "near," and "about," generally refer to being within +/- 10% of a target value. For example, unless otherwise specified in the explicit context of their use, the terms "substantially equal," "about equal" and "approximately equal" mean that there is no more than incidental variation between among things so described. In the art, such variation is typically no more than +/-10% of a predetermined target value.

It is to be understood that the terms so used are interchangeable under appropriate circumstances such that the embodiments of the invention described herein are, for example, capable of operation in other orientations than those illustrated or otherwise described herein.

Unless otherwise specified the use of the ordinal adjectives "first," "second," and "third," etc., to describe a common object, merely indicate that different instances of like objects are being referred to and are not intended to imply that the objects so described must be in a given sequence, either temporally, spatially, in ranking or in any other manner.

The terms "left," "right," "front," "back," "top," "bottom," "over," "under," and the like in the description and in the claims, if any, are used for descriptive purposes and not necessarily for describing permanent relative positions. For example, the terms "over," "under," "front side," "back side," "top," "bottom," "over," "under," and "on" as used herein refer to a relative position of one component, structure, or material with respect to other referenced components, structures or materials within a device, where such physical relationships are noteworthy. These terms are employed herein for descriptive purposes only and predominantly within the context of a device z-axis and therefore may be relative to an orientation of a device. Hence, a first material "over" a second material in the context of a figure provided herein may also be "under" the second material if the device is oriented upside-down relative to the context of the figure provided. In the context of materials, one material disposed over or under another may be directly in contact or may have one or more intervening materials. Moreover, one material disposed between two materials may be directly in contact with the two layers or may have one or more intervening layers. In contrast, a first material "on" a second material is in direct contact with that second material. Similar distinctions are to be made in the context of component assemblies.

The term "between" may be employed in the context of the z-axis, x-axis or y-axis of a device. A material that is between two other materials may be in contact with one or both of those materials, or it may be separated from both of the other two materials by one or more intervening materials. A material "between" two other materials may therefore be in contact with either of the other two materials, or it may be coupled to the other two materials through an intervening material. A device that is between two other devices may be directly connected to one or both of those devices, or it may be separated from both of the other two devices by one or more intervening devices.

As used throughout this description, and in the claims, a list of items joined by the term "at least one of' or "one or more of' can mean any combination of the listed terms. For example, the phrase "at least one of A, B or C" can mean A; B; C; A and B; A and C; B and C; or A, B and C. It is pointed out that those elements of a figure having the same reference numbers (or names) as the elements of any other figure can operate or function in any manner similar to that described, but are not limited to such.

In addition, the various elements of combinatorial logic and sequential logic discussed in the present disclosure may pertain both to physical structures (such as AND gates, OR gates, or XOR gates), or to synthesized or otherwise optimized collections of devices implementing the logical structures that are Boolean equivalents of the logic under discussion.

Some embodiments provide technology to reduce a number of ports in fast systolic arrays. In computer architectures, for example, a systolic array may refer to a network of tightly coupled compute units (CUs). Each CU may compute a partial result as a function of the data received from its upstream neighbors, store the result, and passes the result downstream. Systolic arrays may be useful for dense linear algebra computations, such as matrix products, solving systems of linear equations, lower-upper decomposition, etc., for banded matrices. In some implementations, a systolic array may be hard-wired for a specific operation, such as a matrix fused multiply-add (FMA) operation.

In general, a matrix operation may involve several dimensions. For example, one matrix dimension may refer to a number of rows of the matrix. Another matrix dimension may refer to a number of columns of the matrix. An example set of dimensions may correspond to a number of rows (nominally 'M') and a number of columns (nominally 'K') of a first tile A of a matrix operation (e.g., tile A is a M by K matrix). Another example set of dimensions may correspond to a number of rows (nominally 'K') and a number of columns (nominally 'N') of a second tile B of the matrix operation (e.g., tile B is a K by N matrix). A general requirement of matrix multiplication is that the number of columns of one matrix of the operation is equal to the number of rows of the other matrix of the operation. An example resulting tile C from the matrix operation has a set of dimensions with the same quantity of columns as the first tile A and has the same quantity of rows as the second tile B (e.g., the resulting tile C is a M by N matrix). A matrix operation may refer to any known matrix calculation such as a matrix multiplication operation (e.g., expressed as C = A^{∗}B), a matrix FMA operation (e.g., expressed as C += A^{∗}B), etc.

As a baseline, for purposes of explanation and illustration, an example systolic array operates on 16x16 tiles. If the systolic array is able to perform a matrix operation with dimensions 16x16x16 in 16 cycles, then for a peak utilization of one row per cycle the example systolic array needs two read ports and 1 write port. In this example, every port allows the transfer of one row per cycle, and the 16 compute cycles will overlap 16 reads of the tile A, 16 reads of the tile B, and 16 writes of the tile C. If the throughput of the example systolic array is doubled (e.g., increased by 2x), then the 16x16x16 matrix operation will take 8 cycles instead of 16. In a conventional system, to keep peak utilization of the systolic array, the read and write ports must increase by 2x as well. A problem is that adding or widening ports can be a significant source of circuit area increase, which involves higher area cost for increased systolic array throughput. Some embodiments overcome one or more of the foregoing problems. Some embodiments may provide technology to increase the throughput of a systolic array without increasing the number of read/write ports for the systolic array.

Some embodiments may provide technology to provide instructions for a systolic array to operate on two or more tiles per matrix dimension. For example, some embodiments may provide instructions that are defined to operate on multiple tiles in all M/N/K matrix dimensions. Some embodiments may provide technology for additional data reuse that advantageously allows an increase in compute throughput while keeping the same sizes of the ports leading in and out of the systolic array. For example, some embodiments may provide improved throughput of an accelerator that implements a systolic array (e.g., such as a tiled matrix multiply (TMUL) unit, a data parallel cluster, etc.) without the area increase of more ports.

Advantageously, to reduce the number of read and write ports, some embodiments may provide technology to implement a matrix operation instruction that operates on more tiles. For example, a multiple tiles per matrix dimension (MTPMD)-matrix instruction may be formatted to specify the type of matrix operation, the data type for the operation, multiple source tiles per dimension, and multiple destination tiles per dimension for the results of the matrix operations.

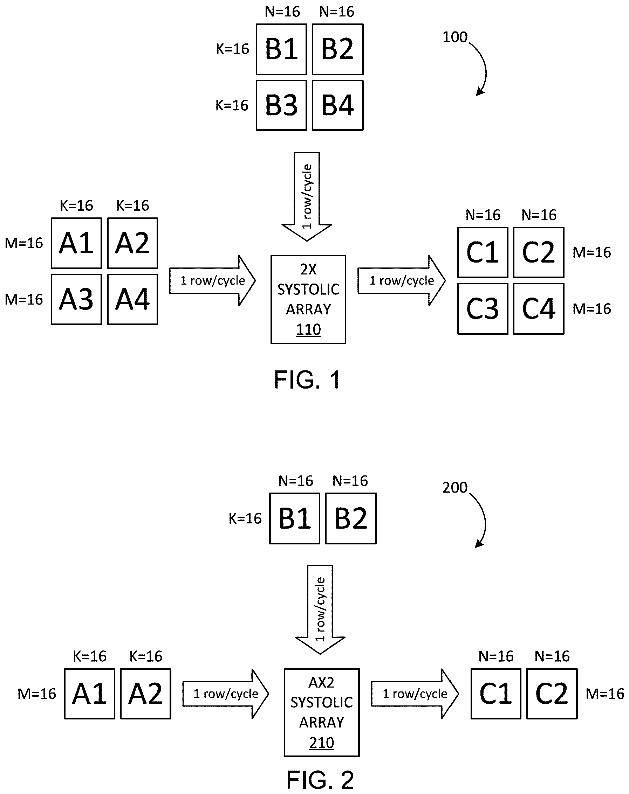

With reference to FIG. 1, an embodiment of a compute system 100 includes a 2X systolic array 110 that has double the throughput of the example systolic array discussed above. In accordance with some embodiments, one or more MTPMD-matrix instructions may be extended on all three M/N/K dimensions. For example, an embodiment of a MTPMD-matrix instruction may be extended to two tiles on the M dimension, two tiles on the N dimension and two tiles on the K dimension. As illustrated in FIG. 1, an embodiment of a MTPMD-matrix instruction may specify four first tiles for the operation (e.g., A1, A2, A3, and A4), four second tiles for the operation (e.g., B1, B2, B3, and B4), and four result tiles (e.g., C1 += A1^{∗}B1, C2 += A2^{∗}B2, C3 += A3^{∗}B3, and C4 += A4^{∗}B4). In this example, there will be 64 compute cycles during which 64 rows of the tiles A1 to A4 and B1 to B4 will be read and 64 rows of the tiles C1 to C4 will be written, providing a peak utilization of 1 row per cycle without increasing the number of ports for the 2X systolic array 110.

With reference to FIG. 2, an embodiment of a compute system 200 includes a AX2 systolic array 210. In some embodiments, there may be asymmetry between the A and B tiles. In the example system 200, the AX2 systolic array 210 consumes A tiles twice as fast compared to B tiles (e.g., A tiles may utilize a larger datatype, A tiles may be less compressed, etc.). In this example, 16 cycles of compute will require 32 rows of tile A and 16 rows of tile B. To avoid increasing the read/write ports, an embodiment of a MTPMD-matrix instruction may be defined to operate on two tiles of A, two tiles of B and generate two tiles of C. As illustrated in FIG. 2, an embodiment of a MTPMD-matrix instruction may specify two first tiles for the operation (e.g., tiles A1 and A2), two second tiles for the operation (e.g., tiles B1 and B2), and two result tiles (e.g., tiles C1 += A1^{∗}B1 and C2 +=A2^{∗}B2). The compute takes 32 cycles, and tile groups A1 to A2, B1 to B2, and C1 to C2 all have 32 rows, matching the read/write ports of 1 row per matrix.

As a general formulation, an embodiment of a systolic array utilizes Y cycles for a matrix multiplication of YxY tiles. If the systolic array's throughput is increased to require kA A tiles on the K dimension and kB B tiles on the K dimension to generate a single C tile in Y cycles, then in order to keep the same sizes of read/write ports an embodiment of a MTPMD-matrix instruction may be defined on a block of kB x kA A tiles, kB x kA B tiles to generate kB x kA C tiles. In this embodiment, there will be Y^{∗}kB^{∗}kA compute cycles, during which kA^{∗}kB A, B, and C tiles will be read/written, matching 1 row per cycle for each of the ports.

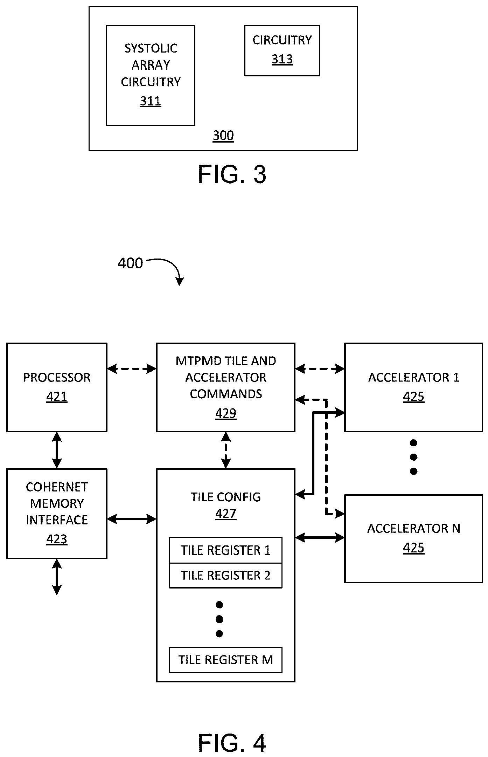

With reference to FIG. 3, an embodiment of an apparatus 300 may include systolic array circuitry 311 to perform a matrix operation on two input tiles to produce an output tile result, and circuitry 313 coupled to the systolic array circuitry 311 to cause the systolic array circuitry 311 to perform respective full matrix operations on more than one tile per matrix dimension in response to a single request. For example, the single request may indicate two or more input tiles per row dimension of a tile matrix, and/or two or more input tiles per column dimension of a tile matrix. In some embodiments, in response to the single request (e.g., that indicates two tiles in one matrix dimension), the circuitry 313 may be configured to cause the systolic array circuitry 311 to perform a first full matrix operation on a first tile and a second tile indicated by the single request, store a result of the first full matrix operation in a third tile indicated by the single request, perform a second full matrix operation on a fourth tile and a fifth tile indicated by the single request, and store a result of the second full matrix operation in a sixth tile indicated by the single request. For example, the respective input and result tiles may be indicated in the request itself (e.g., as fields of the request), or the request may point to the information that identifies the tiles.

In some embodiments, in response to the single request (e.g., that indicates two tiles in each of two matrix dimensions), the circuitry 313 may be further configured to cause the systolic array circuitry 311 to perform a third full matrix operation on a seventh tile and an eighth tile indicated by the single request, store a result of the third full matrix operation in a ninth indicated by the single request, perform a fourth full matrix operation on a tenth tile and an eleventh tile indicated by the single request, and store a result of the fourth full matrix operation in a twelfth tile indicated by the single request. For example, the respective input and result tiles may be indicated in the request itself (e.g., as fields of the request), or the request may point to the information that identifies the tiles. For example, the matrix operation may include a matrix multiplication operation, and/or a matrix FMA operation.

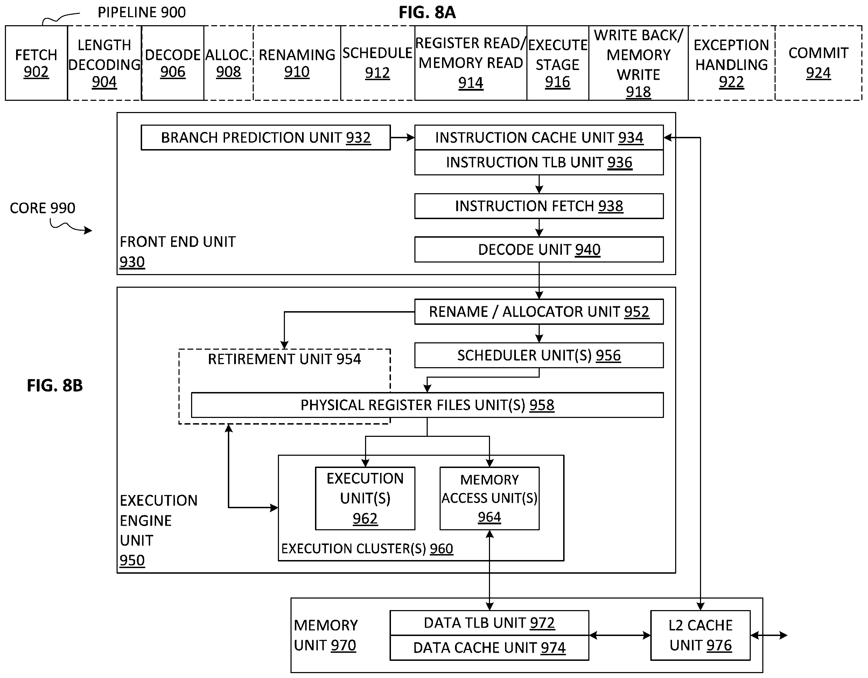

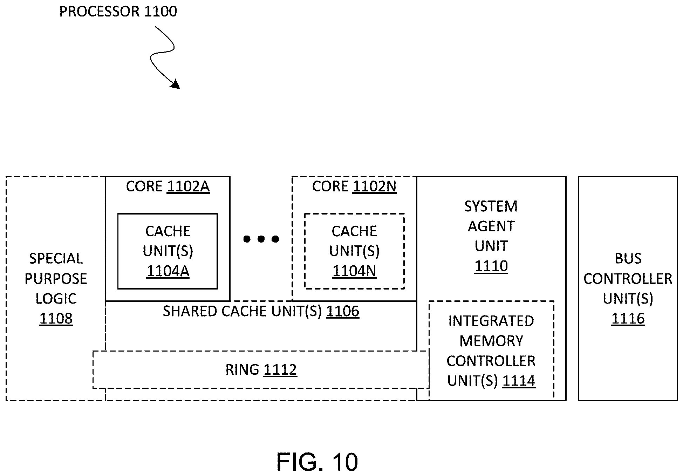

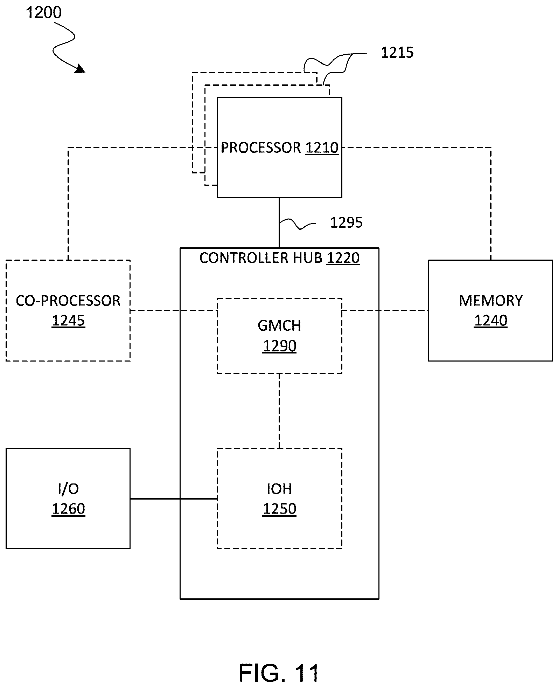

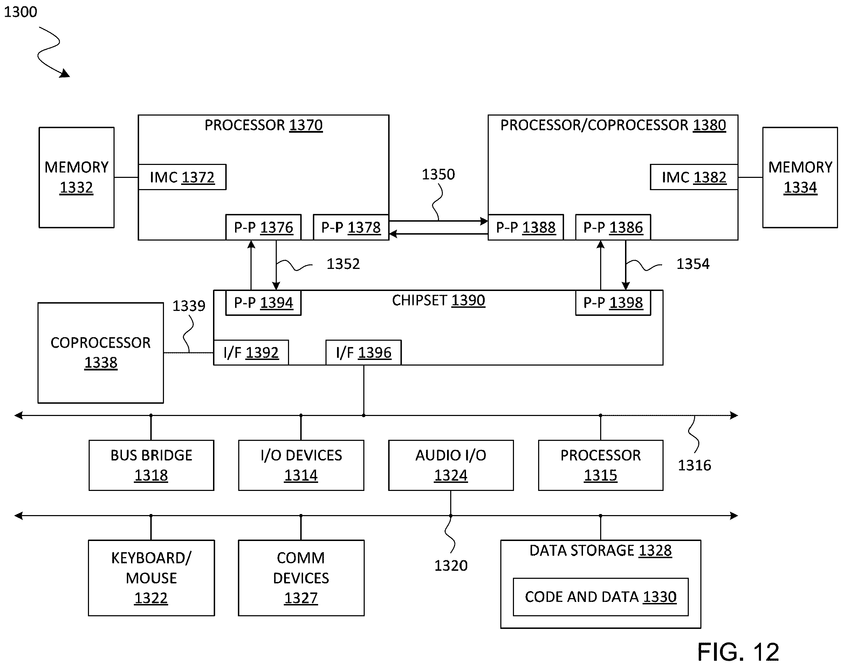

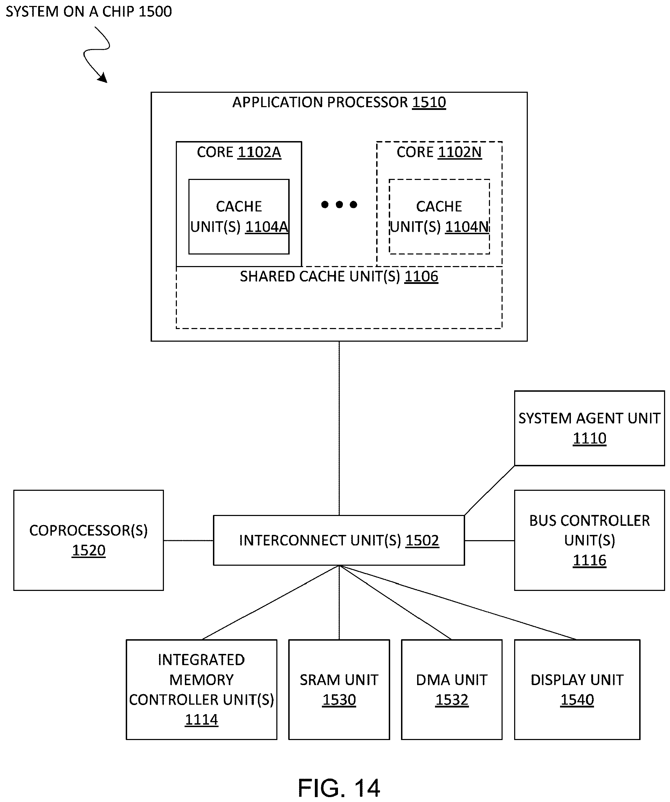

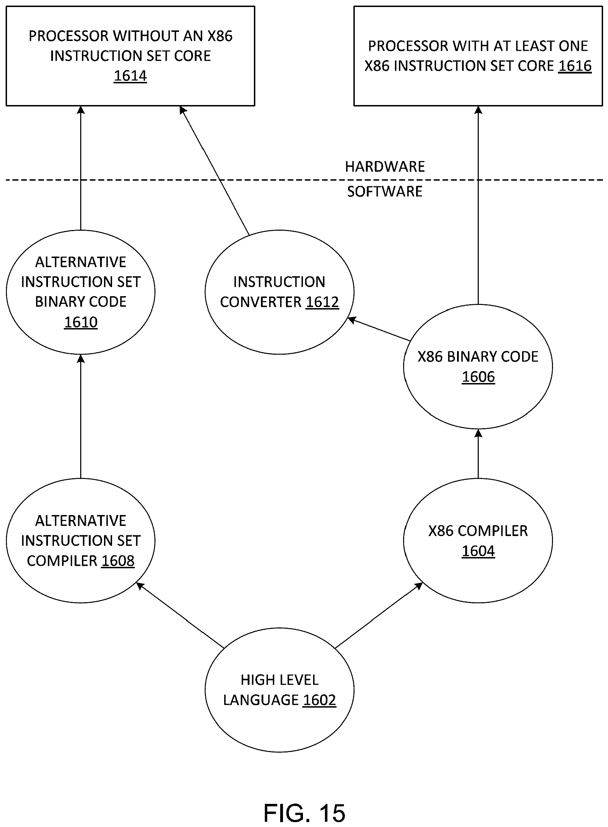

Embodiments of the systolic array circuitry 311, and/or the circuitry 313, may be incorporated in or integrated with a processor such as those described herein including, for example, the core 990 (FIG. 8B), the cores 1102A-N (FIGs. 10, 14), the processor 1210 (FIG. 11), the co-processor 1245 (FIG. 11), the processor 1370 (FIGs. 12-13), the processor/coprocessor 1380 (FIGs. 12-13), the coprocessor 1338 (FIGs. 12-13), the coprocessor 1520 (FIG. 14), and/or the processors 1614, 1616 (FIG. 15).

With reference to FIG. 4, an embodiment of a compute system 400 may include a processor 421, a coherent memory interface 423, one or more accelerator(s) 425 (e.g., N accelerators, where N > 0), tile configuration unit 427, and a MTPMD tile and accelerator command unit 429, coupled as shown. The solid lines may indicate data flow (e.g., where the accelerator(s) 425 communicate to the host/processor 421 through memory), while the dashed lines may indicate commands and status delivered synchronously via tile/accelerator instructions. The tile configuration unit 427 may include M tile registers, where M > 2. In accordance with some embodiments, the command unit 429 is configured to receive and process commands/instructions from the processor 421 to perform respective full matrix operations on more than one tile per matrix dimension in response to a single command/instruction/request. Advantageously, throughput of the accelerator(s) 425 may be improved without increasing the number of ports or an area increase for more ports.

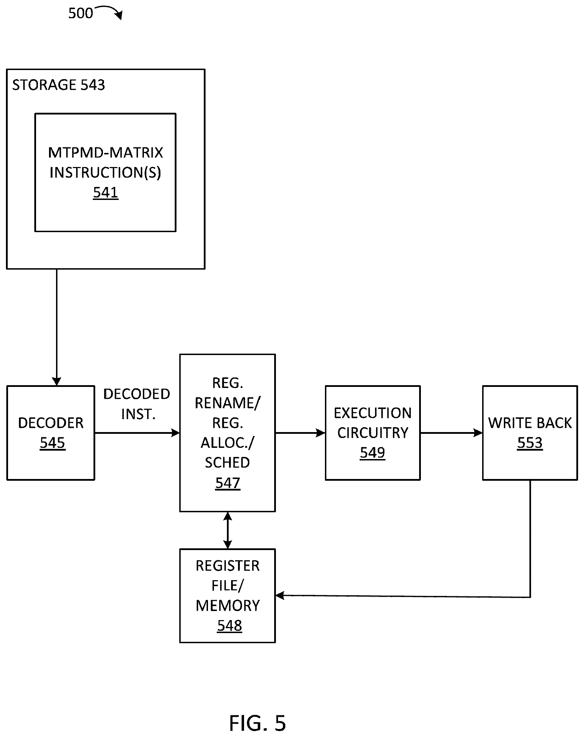

FIG. 5 illustrates an embodiment of hardware 500 to process instructions such as MTPMD-matrix instructions (e.g., MTDPBF16PS, MTDPBSSD, MTDPBSUD, MTDPBUSD, MTDPBUUD, etc.). As illustrated, storage 543 stores one or more MTPMD-matrix instructions 541 to be executed. Decode circuitry 545 may be configured to decode a single instruction, the single instruction to include respective fields for one or more source operands, one or more destination operands, and an opcode, the opcode to indicate execution circuitry is to perform respective full matrix operations on more than one tile per matrix dimension.

One of the MTPMD-matrix instructions 541 is received by decode circuitry 545. For example, the decode circuitry 545 receives this instruction from fetch logic/circuitry. The instruction includes fields for an opcode, one or more source(s), and one or more destination(s). In some embodiments, the source(s) and destination(s) are registers, and in other embodiments one or more are memory locations. In some embodiments, the opcode details which MTPMD-matrix operation is to be performed.

The decode circuitry 545 decodes the instruction into one or more operations. In some embodiments, this decoding includes generating a plurality of micro-operations to be performed by execution circuitry (such as execution circuitry 549). The decode circuitry 545 also decodes instruction prefixes.

In some embodiments, register renaming, register allocation, and/or scheduling circuitry 547 provides functionality for one or more of: 1) renaming logical operand values to physical operand values (e.g., a register alias table in some embodiments), 2) allocating status bits and flags to the decoded instruction, and 3) scheduling the decoded instruction for execution on execution circuitry out of an instruction pool (e.g., using a reservation station in some embodiments).

Registers (register file) and/or memory 548 store data as operands of the instruction to be operated on by execution circuitry 549. Exemplary register types include packed data registers, general purpose registers, and floating point registers.

Execution circuitry 549 executes the decoded instruction. Exemplary detailed execution circuitry is shown in FIG. 8B, etc. The execution of the decoded instruction causes the execution circuitry 549 to execute the decoded instruction according to the opcode. For some MTPMD-matrix instructions, for example, the execution of the decoded instruction causes the execution circuitry 549 to retrieve tile information from respective locations indicated by the one or more source operands, to perform respective full matrix operations on more than one tile per matrix dimension indicated by the retrieved tile information, and to store respective results of the respective full matrix operations in respective tiles at respective locations indicated by the one or more destination operands.

For example, the retrieved tile information indicates two or more tiles per row dimension of a tile matrix, and/or two or more tiles per column dimension of a tile matrix. For some MTPMD-matrix instructions, the execution circuitry 549 is further to execute the decoded instruction according to the opcode to perform a first full matrix operation on a first tile indicated by the one or more source operands and a second tile indicated by the one or more source operands, store a result of the first full matrix operation in a third tile indicated by the one or more destination operands, perform a second full matrix operation on a fourth tile indicated by the one or more source operands and a fifth tile indicated by the one or more source operands, and store a result of the second full matrix operation in a sixth tile indicated by the one or more destination operands.

For some MTPMD-matrix instructions, the execution circuitry 549 is further to execute the decoded instruction according to the opcode to perform a third full matrix operation on a seventh tile indicated by the one or more source operands and an eighth tile indicated by the one or more source operands, store a result of the third full matrix operation in a ninth tile indicated by the one or more destination operands, perform a fourth full matrix operation on a tenth tile indicated by the one or more source operands and an eleventh tile indicated by the one or more source operands, and store a result of the fourth full matrix operation in a twelfth tile indicated by the one or more destination operands. For example, the matrix operation includes a matrix multiplication operation, and/or a matrix FMA operation.

In some embodiments, retirement/write back circuitry 553 architecturally commits the destination register into the registers or memory 548 and retires the instruction.

An embodiment of a format for a MTPMD-matrix instruction is MTPMD MNEMONIC DSTREG, SRC1REG, SRC2REG. In some embodiments, MTPMD_MNEMONIC is the opcode mnemonic of the instruction. DSTREG is one or more fields for the destination operand(s) to indicate the result tile registers, or to indicate one or more memory locations that store the respective result tile registers (e.g., or pointers thereto). SRC1REG is one or more field(s) for a source operand to indicate one or more first tile registers for the operation or one or more memory locations that store the respective first tile registers (e.g., or pointers thereto). SRC2REG is one or more field(s) for a source operand to indicate one or more second tile registers for the operation or one or more memory locations that store the respective first tile registers (e.g., or pointers thereto). Non-limiting example instructions and description thereof are listed in Table 1 below.

**Table 1**

| Instruction | Description |
|---|---|
| MTDPBF16PS | MTPMD dot product of BF16 tiles accumulated into packed single precision tile |
| MTDPBSSD | MTPMD dot product of signed bytes with Dword accumulation |
| MTDPBSUD | MTPMD dot product of signed/unsigned bytes with Dword accumulation |
| MTDPBUSD | MTPMD dot product of unsigned/signed bytes with Dword accumulation |
| MTDPBUUD | MTPMD dot product of unsigned/unsigned bytes with Dword accumulation |

In one example, a MTPMD-matrix instruction with the format <MTDPBF16PS tile1, tile2, tile3, tile4, tile5, tile6> may be executed to cause a systolic array to matrix multiply BF16 elements from tile3 and tile5 and accumulate the packed single precision elements in tile1, and then to matrix multiply BF16 elements from tile4 and tile6 and accumulate the packed single precision elements in tile2. In another example, a MTPMD-matrix instruction with the format <MTDPBSSD tile1, tile2, tile3, tile4, tile5, tile6, tile7, tile8, tile9, tile10, tile11, tile12> may be executed to cause a systolic array to matrix multiply signed byte elements from tile5 and tile9 and accumulate the dword elements in tile1, and then to multiply signed byte elements from tile6 and tile10 and accumulate the dword elements in tile2, and then to multiply signed byte elements from tile7 and tile11 and accumulate the dword elements in tile3, and then to multiply signed byte elements from tile8 and tile12 and accumulate the dword elements in tile4.

In another example, a MTPMD-matrix instruction with the format <MTDPBUUD result_tile_ptr, input_tile1_ptr, input_tile2_ptr> may be executed to cause a systolic array to matrix multiply unsigned byte elements from two or more tiles pointed to by input_tile1_ptr by unsigned elements from two or more tiles pointed to input_tile2_ptr and accumulate the dword elements in two or more tiles pointed to by result_tile_ptr. For example, the respective pointers may point to respective memory locations that store respective data structures that indicate the number of tiles and respective register/memory locations for each input/result tile. Those skilled in the art will appreciate that a wide variety of other instruction formats may be utilized where execution of a single instruction may cause a systolic array to perform respective full matrix operations on more than one tile per matrix dimension in response to the single instruction.

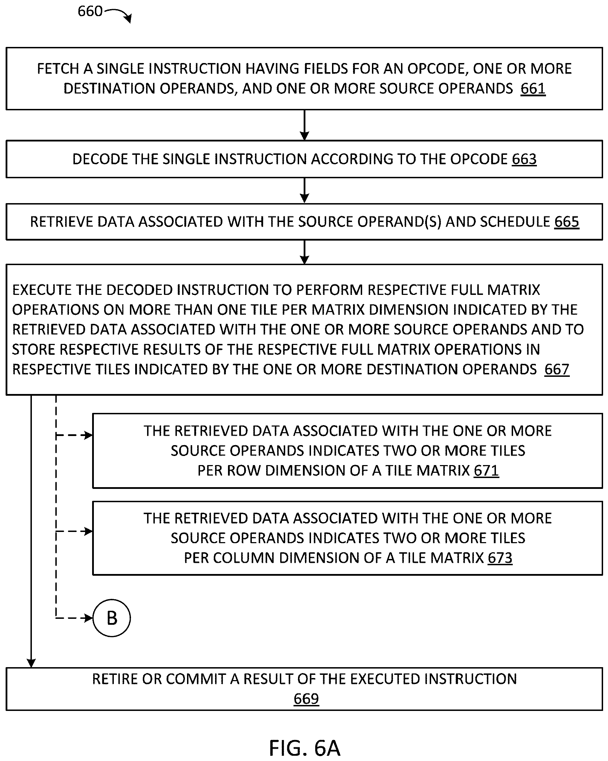

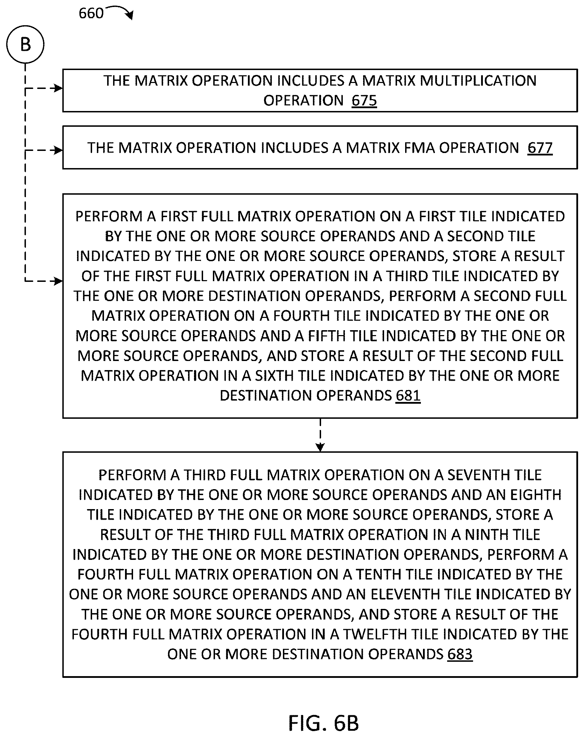

FIGs. 6A to 6B illustrate an embodiment of method 660 performed by a processor to process MTPMD-matrix instructions. For example, a processor core as shown in FIG. 8B, a pipeline as detailed below, etc. performs this method.

At 661, an instruction is fetched. For example, a MTPMD-matrix instruction is fetched. The MTPMD-matrix instruction includes fetching a single instruction having fields for an opcode, one or more destination operands, and one or more source operands. In some embodiments, the instruction further includes a field for a writemask. In some embodiments, the instruction is fetched from an instruction cache. The source operand(s) and destination operand(s) are packed data. The opcode of the MTPMD-matrix instruction indicates which matrix operation (e.g., matrix multiplication, matrix FMA, etc.) to perform.

The fetched instruction is decoded according to the opcode at 663. For example, the fetched MTPMD-matrix instruction is decoded by decode circuitry such as that detailed herein.

Data values associated with the source operands of the decoded instruction are retrieved and execution of the decoded instruction is scheduled at 665. For example, when one or more of the source operands are memory operands, the data from the indicated memory location is retrieved.

At 667, the decoded instruction is executed by execution circuitry (hardware) such as that detailed herein. For the MTPMD-matrix instruction, the execution will cause execution circuitry to perform respective full matrix operations on more than one tile per matrix dimension indicated by the retrieved data associated with the one or more source operands and to store respective results of the respective full matrix operations in respective tiles indicated by the one or more destination operands.

In some embodiments, the instruction is committed or retired at 669.

In some embodiments, the retrieved data associated with the one or more source operands indicates two or more tiles per row dimension of a tile matrix at 671. In some embodiments, the retrieved data associated with the one or more source operands indicates two or more tiles per column dimension of a tile matrix at 673. In some embodiments, the matrix operation includes a matrix multiplication operation at 675. In some embodiments, the matrix operation includes a matrix FMA operation at 677.

In some embodiments, the execution of the decoded MTPMD-matrix instruction will cause execution circuitry to perform a first full matrix operation on a first tile indicated by the one or more source operands and a second tile indicated by the one or more source operands, store a result of the first full matrix operation in a third tile indicated by the one or more destination operands, perform a second full matrix operation on a fourth tile indicated by the one or more source operands and a fifth tile indicated by the one or more source operands, and store a result of the second full matrix operation in a sixth tile indicated by the one or more destination operands at 681. In some embodiments, the execution of the decoded MTPMD-matrix instruction will further cause execution circuitry to perform a third full matrix operation on a seventh tile indicated by the one or more source operands and an eighth tile indicated by the one or more source operands, store a result of the third full matrix operation in a ninth tile indicated by the one or more destination operands, perform a fourth full matrix operation on a tenth tile indicated by the one or more source operands and an eleventh tile indicated by the one or more source operands, and store a result of the fourth full matrix operation in a twelfth tile indicated by the one or more destination operands at 683.

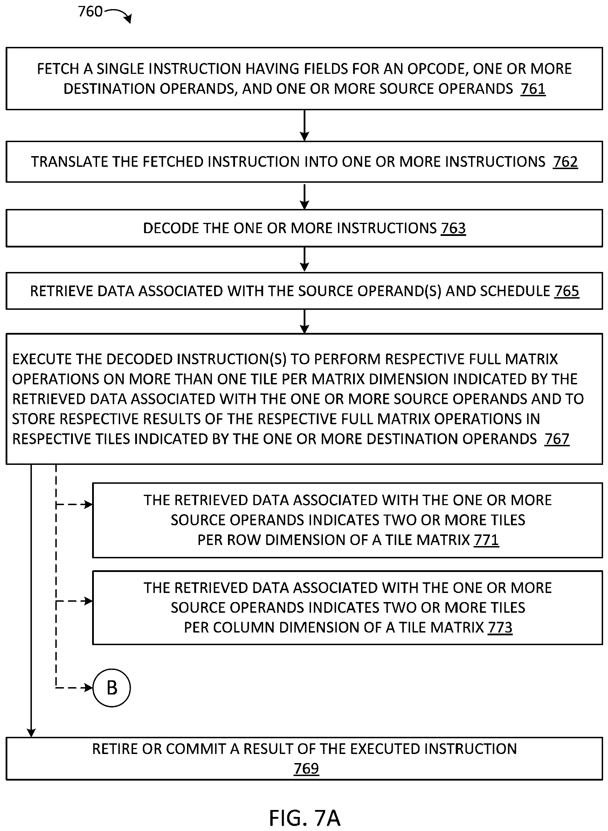

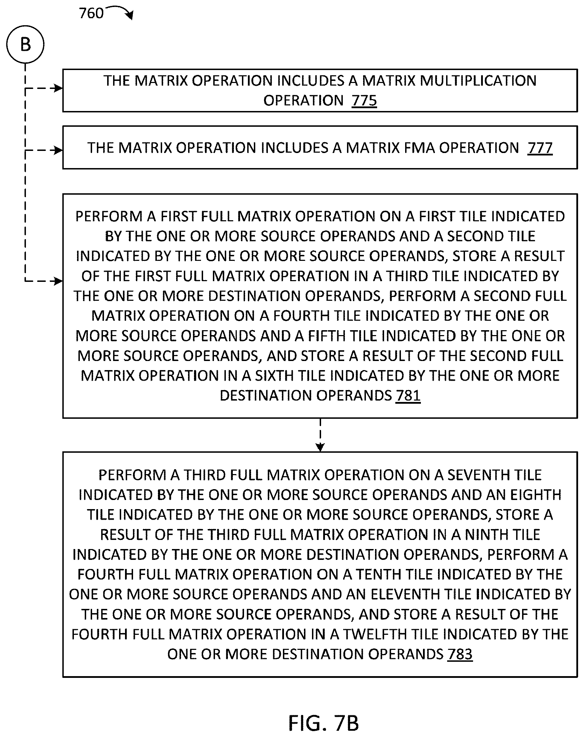

FIGs. 7A to 7B illustrate an embodiment of method 760 performed by a processor to process a MTPMD-matrix instruction using emulation or binary translation. For example, a processor core as shown in FIG. 8B, a pipeline as detailed below, etc. performs this method.

At 761, an instruction is fetched. For example, a MTPMD-matrix instruction is fetched. The MTPMD-matrix instruction includes fetching a single instruction having fields for an opcode, one or more destination operands, and one or more source operands. In some embodiments, the instruction further includes a field for a writemask. In some embodiments, the instruction is fetched from an instruction cache. The source operand(s) and destination operand(s) are packed data. The opcode of the MTPMD-matrix instruction indicates which matrix operation (e.g., matrix multiplication, matrix FMA, etc.) to perform.

The fetched instruction of the first instruction set is translated into one or more instructions of a second instruction set at 762.

The one or more translated instructions of the second instruction set are decoded at 763. In some embodiments, the translation and decoding are merged.

Data values associated with the source operands of the decoded instruction(s) are retrieved and execution of the decoded instruction(s) is scheduled at 765. For example, when one or more of the source operands are memory operands, the data from the indicated memory location is retrieved.

At 767, the decoded instruction(s) is executed by execution circuitry (hardware) such as that detailed herein. For the MTPMD-matrix instruction, the execution will cause execution circuitry to perform respective full matrix operations on more than one tile per matrix dimension indicated by the retrieved data associated with the one or more source operands and to store respective results of the respective full matrix operations in respective tiles indicated by the one or more destination operands.

In some embodiments, the instruction is committed or retired at 769.

In some embodiments, the retrieved data associated with the one or more source operands indicates two or more tiles per row dimension of a tile matrix at 771. In some embodiments, the retrieved data associated with the one or more source operands indicates two or more tiles per column dimension of a tile matrix at 773. In some embodiments, the matrix operation includes a matrix multiplication operation at 775. In some embodiments, the matrix operation includes a matrix FMA operation at 777.

In some embodiments, the execution of the decoded MTPMD-matrix instruction will cause execution circuitry to perform a first full matrix operation on a first tile indicated by the one or more source operands and a second tile indicated by the one or more source operands, store a result of the first full matrix operation in a third tile indicated by the one or more destination operands, perform a second full matrix operation on a fourth tile indicated by the one or more source operands and a fifth tile indicated by the one or more source operands, and store a result of the second full matrix operation in a sixth tile indicated by the one or more destination operands at 781. In some embodiments, the execution of the decoded MTPMD-matrix instruction will further cause execution circuitry to perform a third full matrix operation on a seventh tile indicated by the one or more source operands and an eighth tile indicated by the one or more source operands, store a result of the third full matrix operation in a ninth tile indicated by the one or more destination operands, perform a fourth full matrix operation on a tenth tile indicated by the one or more source operands and an eleventh tile indicated by the one or more source operands, and store a result of the fourth full matrix operation in a twelfth tile indicated by the one or more destination operands at 783.

Those skilled in the art will appreciate that a wide variety of devices may benefit from the foregoing embodiments. The following exemplary core architectures, processors, and computer architectures are non-limiting examples of devices that may beneficially incorporate embodiments of the technology described herein.

### Exemplary Core Architectures, Processors, and Computer Architectures

Processor cores may be implemented in different ways, for different purposes, and in different processors. For instance, implementations of such cores may include: 1) a general purpose in-order core intended for general-purpose computing; 2) a high performance general purpose out-of-order core intended for general-purpose computing; 3) a special purpose core intended primarily for graphics and/or scientific (throughput) computing. Implementations of different processors may include: 1) a CPU including one or more general purpose in-order cores intended for general-purpose computing and/or one or more general purpose out-of-order cores intended for general-purpose computing; and 2) a coprocessor including one or more special purpose cores intended primarily for graphics and/or scientific (throughput). Such different processors lead to different computer system architectures, which may include: 1) the coprocessor on a separate chip from the CPU; 2) the coprocessor on a separate die in the same package as a CPU; 3) the coprocessor on the same die as a CPU (in which case, such a coprocessor is sometimes referred to as special purpose logic, such as integrated graphics and/or scientific (throughput) logic, or as special purpose cores); and 4) a system on a chip that may include on the same die the described CPU (sometimes referred to as the application core(s) or application processor(s)), the above described coprocessor, and additional functionality. Exemplary core architectures are described next, followed by descriptions of exemplary processors and computer architectures.

### Exemplary Core Architectures

### In-order and out-of-order core block diagram

FIG. 8A is a block diagram illustrating both an exemplary in-order pipeline and an exemplary register renaming, out-of-order issue/execution pipeline according to embodiments of the invention. FIG. 8B is a block diagram illustrating both an exemplary embodiment of an in-order architecture core and an exemplary register renaming, out-of-order issue/execution architecture core to be included in a processor according to embodiments of the invention. The solid lined boxes in FIGs. 8A-B illustrate the in-order pipeline and in-order core, while the optional addition of the dashed lined boxes illustrates the register renaming, out-of-order issue/execution pipeline and core. Given that the in-order aspect is a subset of the out-of-order aspect, the out-of-order aspect will be described.

In FIG. 8A, a processor pipeline 900 includes a fetch stage 902, a length decode stage 904, a decode stage 906, an allocation stage 908, a renaming stage 910, a scheduling (also known as a dispatch or issue) stage 912, a register read/memory read stage 914, an execute stage 916, a write back/memory write stage 918, an exception handling stage 922, and a commit stage 924.

FIG. 8B shows processor core 990 including a front end unit 930 coupled to an execution engine unit 950, and both are coupled to a memory unit 970. The core 990 may be a reduced instruction set computing (RISC) core, a complex instruction set computing (CISC) core, a very long instruction word (VLIW) core, or a hybrid or alternative core type. As yet another option, the core 990 may be a special-purpose core, such as, for example, a network or communication core, compression engine, coprocessor core, general purpose computing graphics processing unit (GPGPU) core, graphics core, or the like.

The front end unit 930 includes a branch prediction unit 932 coupled to an instruction cache unit 934, which is coupled to an instruction translation lookaside buffer (TLB) 936, which is coupled to an instruction fetch unit 938, which is coupled to a decode unit 940. The decode unit 940 (or decoder) may decode instructions, and generate as an output one or more micro-operations, micro-code entry points, microinstructions, other instructions, or other control signals, which are decoded from, or which otherwise reflect, or are derived from, the original instructions. The decode unit 940 may be implemented using various different mechanisms. Examples of suitable mechanisms include, but are not limited to, look-up tables, hardware implementations, programmable logic arrays (PLAs), microcode read only memories (ROMs), etc. In one embodiment, the core 990 includes a microcode ROM or other medium that stores microcode for certain macroinstructions (e.g., in decode unit 940 or otherwise within the front end unit 930). The decode unit 940 is coupled to a rename/allocator unit 952 in the execution engine unit 950.

The execution engine unit 950 includes the rename/allocator unit 952 coupled to a retirement unit 954 and a set of one or more scheduler unit(s) 956. The scheduler unit(s) 956 represents any number of different schedulers, including reservations stations, central instruction window, etc. The scheduler unit(s) 956 is coupled to the physical register file(s) unit(s) 958. Each of the physical register file(s) units 958 represents one or more physical register files, different ones of which store one or more different data types, such as scalar integer, scalar floating point, packed integer, packed floating point, vector integer, vector floating point, status (e.g., an instruction pointer that is the address of the next instruction to be executed), etc. In one embodiment, the physical register file(s) unit 958 comprises a vector registers unit, a write mask registers unit, and a scalar registers unit. These register units may provide architectural vector registers, vector mask registers, and general purpose registers. The physical register file(s) unit(s) 958 is overlapped by the retirement unit 954 to illustrate various ways in which register renaming and out-of-order execution may be implemented (e.g., using a reorder buffer(s) and a retirement register file(s); using a future file(s), a history buffer(s), and a retirement register file(s); using a register maps and a pool of registers; etc.). The retirement unit 954 and the physical register file(s) unit(s) 958 are coupled to the execution cluster(s) 960. The execution cluster(s) 960 includes a set of one or more execution units 962 and a set of one or more memory access units 964. The execution units 962 may perform various operations (e.g., shifts, addition, subtraction, multiplication) and on various types of data (e.g., scalar floating point, packed integer, packed floating point, vector integer, vector floating point). While some embodiments may include a number of execution units dedicated to specific functions or sets of functions, other embodiments may include only one execution unit or multiple execution units that all perform all functions. The scheduler unit(s) 956, physical register file(s) unit(s) 958, and execution cluster(s) 960 are shown as being possibly plural because certain embodiments create separate pipelines for certain types of data/operations (e.g., a scalar integer pipeline, a scalar floating point/packed integer/packed floating point/vector integer/vector floating point pipeline, and/or a memory access pipeline that each have their own scheduler unit, physical register file(s) unit, and/or execution cluster - and in the case of a separate memory access pipeline, certain embodiments are implemented in which only the execution cluster of this pipeline has the memory access unit(s) 964). It should also be understood that where separate pipelines are used, one or more of these pipelines may be out-of-order issue/execution and the rest in-order.

The set of memory access units 964 is coupled to the memory unit 970, which includes a data TLB unit 972 coupled to a data cache unit 974 coupled to a level 2 (L2) cache unit 976. In one exemplary embodiment, the memory access units 964 may include a load unit, a store address unit, and a store data unit, each of which is coupled to the data TLB unit 972 in the memory unit 970. The instruction cache unit 934 is further coupled to a level 2 (L2) cache unit 976 in the memory unit 970. The L2 cache unit 976 is coupled to one or more other levels of cache and eventually to a main memory.

By way of example, the exemplary register renaming, out-of-order issue/execution core architecture may implement the pipeline 900 as follows: 1) the instruction fetch 938 performs the fetch and length decoding stages 902 and 904; 2) the decode unit 940 performs the decode stage 906; 3) the rename/allocator unit 952 performs the allocation stage 908 and renaming stage 910; 4) the scheduler unit(s) 956 performs the schedule stage 912; 5) the physical register file(s) unit(s) 958 and the memory unit 970 perform the register read/memory read stage 914; the execution cluster 960 perform the execute stage 916; 6) the memory unit 970 and the physical register file(s) unit(s) 958 perform the write back/memory write stage 918; 7) various units may be involved in the exception handling stage 922; and 8) the retirement unit 954 and the physical register file(s) unit(s) 958 perform the commit stage 924.

The core 990 may support one or more instructions sets (e.g., the x86 instruction set (with some extensions that have been added with newer versions); the MIPS instruction set of MIPS Technologies of Sunnyvale, CA; the ARM instruction set (with optional additional extensions such as NEON) of ARM Holdings of Sunnyvale, CA), including the instruction(s) described herein. In one embodiment, the core 990 includes logic to support a packed data instruction set extension (e.g., AVX1, AVX2), thereby allowing the operations used by many multimedia applications to be performed using packed data.

It should be understood that the core may support multithreading (executing two or more parallel sets of operations or threads), and may do so in a variety of ways including time sliced multithreading, simultaneous multithreading (where a single physical core provides a logical core for each of the threads that physical core is simultaneously multithreading), or a combination thereof (e.g., time sliced fetching and decoding and simultaneous multithreading thereafter such as in the Intel^{®} Hyperthreading technology).

While register renaming is described in the context of out-of-order execution, it should be understood that register renaming may be used in an in-order architecture. While the illustrated embodiment of the processor also includes separate instruction and data cache units 934/974 and a shared L2 cache unit 976, alternative embodiments may have a single internal cache for both instructions and data, such as, for example, a Level 1 (L1) internal cache, or multiple levels of internal cache. In some embodiments, the system may include a combination of an internal cache and an external cache that is external to the core and/or the processor. Alternatively, all of the cache may be external to the core and/or the processor.

### Specific Exemplary In-Order Core Architecture

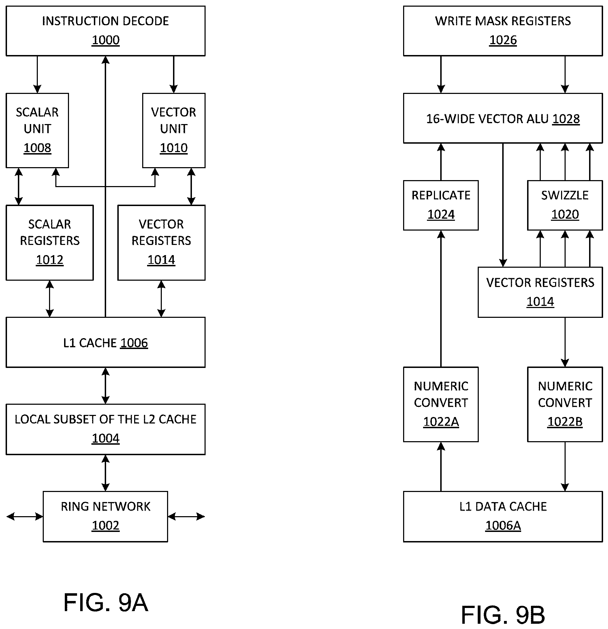

FIGs. 9A-B illustrate a block diagram of a more specific exemplary in-order core architecture, which core would be one of several logic blocks (including other cores of the same type and/or different types) in a chip. The logic blocks communicate through a high-bandwidth interconnect network (e.g., a ring network) with some fixed function logic, memory I/O interfaces, and other necessary I/O logic, depending on the application.

FIG. 9A is a block diagram of a single processor core, along with its connection to the on-die interconnect network 1002 and with its local subset of the Level 2 (L2) cache 1004, according to embodiments of the invention. In one embodiment, an instruction decoder 1000 supports the x86 instruction set with a packed data instruction set extension. An L1 cache 1006 allows low-latency accesses to cache memory into the scalar and vector units. While in one embodiment (to simplify the design), a scalar unit 1008 and a vector unit 1010 use separate register sets (respectively, scalar registers 1012 and vector registers 1014) and data transferred between them is written to memory and then read back in from a level 1 (L1) cache 1006, alternative embodiments of the invention may use a different approach (e.g., use a single register set or include a communication path that allow data to be transferred between the two register files without being written and read back).

The local subset of the L2 cache 1004 is part of a global L2 cache that is divided into separate local subsets, one per processor core. Each processor core has a direct access path to its own local subset of the L2 cache 1004. Data read by a processor core is stored in its L2 cache subset 1004 and can be accessed quickly, in parallel with other processor cores accessing their own local L2 cache subsets. Data written by a processor core is stored in its own L2 cache subset 1004 and is flushed from other subsets, if necessary. The ring network ensures coherency for shared data. The ring network is bi-directional to allow agents such as processor cores, L2 caches and other logic blocks to communicate with each other within the chip. Each ring data-path is 1012-bits wide per direction.

FIG. 9B is an expanded view of part of the processor core in FIG. 9A according to embodiments of the invention. FIG. 9B includes an L1 data cache 1006A part of the L1 cache 1006, as well as more detail regarding the vector unit 1010 and the vector registers 1014. Specifically, the vector unit 1010 is a 16-wide vector processing unit (VPU) (see the 16-wide ALU 1028), which executes one or more of integer, single-precision float, and double-precision float instructions. The VPU supports swizzling the register inputs with swizzle unit 1020, numeric conversion with numeric convert units 1022A-B, and replication with replication unit 1024 on the memory input. Write mask registers 1026 allow predicating resulting vector writes.

FIG. 10 is a block diagram of a processor 1100 that may have more than one core, may have an integrated memory controller, and may have integrated graphics according to embodiments of the invention. The solid lined boxes in FIG. 10 illustrate a processor 1100 with a single core 1102A, a system agent 1110, a set of one or more bus controller units 1116, while the optional addition of the dashed lined boxes illustrates an alternative processor 1100 with multiple cores 1102A-N, a set of one or more integrated memory controller unit(s) 1114 in the system agent unit 1110, and special purpose logic 1108.

Thus, different implementations of the processor 1100 may include: 1) a CPU with the special purpose logic 1108 being integrated graphics and/or scientific (throughput) logic (which may include one or more cores), and the cores 1102A-N being one or more general purpose cores (e.g., general purpose in-order cores, general purpose out-of-order cores, a combination of the two); 2) a coprocessor with the cores 1102A-N being a large number of special purpose cores intended primarily for graphics and/or scientific (throughput); and 3) a coprocessor with the cores 1102A-N being a large number of general purpose in-order cores. Thus, the processor 1100 may be a general-purpose processor, coprocessor or special-purpose processor, such as, for example, a network or communication processor, compression engine, graphics processor, GPGPU (general purpose graphics processing unit), a high-throughput many integrated core (MIC) coprocessor (including 30 or more cores), embedded processor, or the like. The processor may be implemented on one or more chips. The processor 1100 may be a part of and/or may be implemented on one or more substrates using any of a number of process technologies, such as, for example, BiCMOS, CMOS, or NMOS.

The memory hierarchy includes one or more levels of respective caches 1104A-N within the cores 1102A-N, a set or one or more shared cache units 1106, and external memory (not shown) coupled to the set of integrated memory controller units 1114. The set of shared cache units 1106 may include one or more mid-level caches, such as level 2 (L2), level 3 (L3), level 4 (L4), or other levels of cache, a last level cache (LLC), and/or combinations thereof. While in one embodiment a ring based interconnect unit 1112 interconnects the integrated graphics logic 1108, the set of shared cache units 1106, and the system agent unit 1110/integrated memory controller unit(s) 1114, alternative embodiments may use any number of well-known techniques for interconnecting such units. In one embodiment, coherency is maintained between one or more cache units 1106 and cores 1102-A-N.

In some embodiments, one or more of the cores 1102A-N are capable of multithreading. The system agent 1110 includes those components coordinating and operating cores 1102A-N. The system agent unit 1110 may include for example a power control unit (PCU) and a display unit. The PCU may be or include logic and components needed for regulating the power state of the cores 1102A-N and the integrated graphics logic 1108. The display unit is for driving one or more externally connected displays.

The cores 1102A-N may be homogenous or heterogeneous in terms of architecture instruction set; that is, two or more of the cores 1102A-N may be capable of execution the same instruction set, while others may be capable of executing only a subset of that instruction set or a different instruction set.

### Exemplary Computer Architectures

FIGs. 11-14 are block diagrams of exemplary computer architectures. Other system designs and configurations known in the arts for laptops, desktops, handheld PCs, personal digital assistants, engineering workstations, servers, network devices, network hubs, switches, embedded processors, digital signal processors (DSPs), graphics devices, video game devices, set-top boxes, micro controllers, cell phones, portable media players, hand held devices, and various other electronic devices, are also suitable. In general, a huge variety of systems or electronic devices capable of incorporating a processor and/or other execution logic as disclosed herein are generally suitable.

Referring now to FIG. 11, shown is a block diagram of a system 1200 in accordance with one embodiment of the present invention. The system 1200 may include one or more processors 1210, 1215, which are coupled to a controller hub 1220. In one embodiment the controller hub 1220 includes a graphics memory controller hub (GMCH) 1290 and an Input/Output Hub (IOH) 1250 (which may be on separate chips); the GMCH 1290 includes memory and graphics controllers to which are coupled memory 1240 and a coprocessor 1245; the IOH 1250 couples input/output (I/O) devices 1260 to the GMCH 1290. Alternatively, one or both of the memory and graphics controllers are integrated within the processor (as described herein), the memory 1240 and the coprocessor 1245 are coupled directly to the processor 1210, and the controller hub 1220 in a single chip with the IOH 1250.

The optional nature of additional processors 1215 is denoted in FIG. 11 with broken lines. Each processor 1210, 1215 may include one or more of the processing cores described herein and may be some version of the processor 1100.

The memory 1240 may be, for example, dynamic random access memory (DRAM), phase change memory (PCM), or a combination of the two. For at least one embodiment, the controller hub 1220 communicates with the processor(s) 1210, 1215 via a multi-drop bus, such as a frontside bus (FSB), point-to-point interface such as QuickPath Interconnect (QPI), or similar connection 1295.

In one embodiment, the coprocessor 1245 is a special-purpose processor, such as, for example, a high-throughput MIC processor, a network or communication processor, compression engine, graphics processor, GPGPU, embedded processor, or the like. In one embodiment, controller hub 1220 may include an integrated graphics accelerator.

There can be a variety of differences between the physical resources 1210, 1215 in terms of a spectrum of metrics of merit including architectural, microarchitectural, thermal, power consumption characteristics, and the like.

In one embodiment, the processor 1210 executes instructions that control data processing operations of a general type. Embedded within the instructions may be coprocessor instructions. The processor 1210 recognizes these coprocessor instructions as being of a type that should be executed by the attached coprocessor 1245. Accordingly, the processor 1210 issues these coprocessor instructions (or control signals representing coprocessor instructions) on a coprocessor bus or other interconnect, to coprocessor 1245. Coprocessor(s) 1245 accept and execute the received coprocessor instructions.

Referring now to FIG. 12, shown is a block diagram of a first more specific exemplary system 1300 in accordance with an embodiment of the present invention. As shown in FIG. 12, multiprocessor system 1300 is a point-to-point interconnect system, and includes a first processor 1370 and a second processor 1380 coupled via a point-to-point interconnect 1350. Each of processors 1370 and 1380 may be some version of the processor 1100. In one embodiment of the invention, processors 1370 and 1380 are respectively processors 1210 and 1215, while coprocessor 1338 is coprocessor 1245. In another embodiment, processors 1370 and 1380 are respectively processor 1210 coprocessor 1245.

Processors 1370 and 1380 are shown including integrated memory controller (IMC) units 1372 and 1382, respectively. Processor 1370 also includes as part of its bus controller units point-to-point (P-P) interfaces 1376 and 1378; similarly, second processor 1380 includes P-P interfaces 1386 and 1388. Processors 1370, 1380 may exchange information via a point-to-point (P-P) interface 1350 using P-P interface circuits 1378, 1388. As shown in FIG. 12, IMCs 1372 and 1382 couple the processors to respective memories, namely a memory 1332 and a memory 1334, which may be portions of main memory locally attached to the respective processors.

Processors 1370, 1380 may each exchange information with a chipset 1390 via individual P-P interfaces 1352, 1354 using point to point interface circuits 1376, 1394, 1386, 1398. Chipset 1390 may optionally exchange information with the coprocessor 1338 via a high-performance interface 1339 and an interface 1392. In one embodiment, the coprocessor 1338 is a special-purpose processor, such as, for example, a high-throughput MIC processor, a network or communication processor, compression engine, graphics processor, GPGPU, embedded processor, or the like.

A shared cache (not shown) may be included in either processor or outside of both processors, yet connected with the processors via P-P interconnect, such that either or both processors' local cache information may be stored in the shared cache if a processor is placed into a low power mode.

Chipset 1390 may be coupled to a first bus 1316 via an interface 1396. In one embodiment, first bus 1316 may be a Peripheral Component Interconnect (PCI) bus, or a bus such as a PCI Express bus or another third generation I/O interconnect bus, although the scope of the present invention is not so limited.

As shown in FIG. 12, various I/O devices 1314 may be coupled to first bus 1316, along with a bus bridge 1318 which couples first bus 1316 to a second bus 1320. In one embodiment, one or more additional processor(s) 1315, such as coprocessors, high-throughput MIC processors, GPGPU's, accelerators (such as, e.g., graphics accelerators or digital signal processing (DSP) units), field programmable gate arrays, or any other processor, are coupled to first bus 1316. In one embodiment, second bus 1320 may be a low pin count (LPC) bus. Various devices may be coupled to a second bus 1320 including, for example, a keyboard and/or mouse 1322, communication devices 1327 and a storage unit 1328 such as a disk drive or other mass storage device which may include instructions/code and data 1330, in one embodiment. Further, an audio I/O 1324 may be coupled to the second bus 1320. Note that other architectures are possible. For example, instead of the point-to-point architecture of FIG. 12, a system may implement a multi-drop bus or other such architecture.

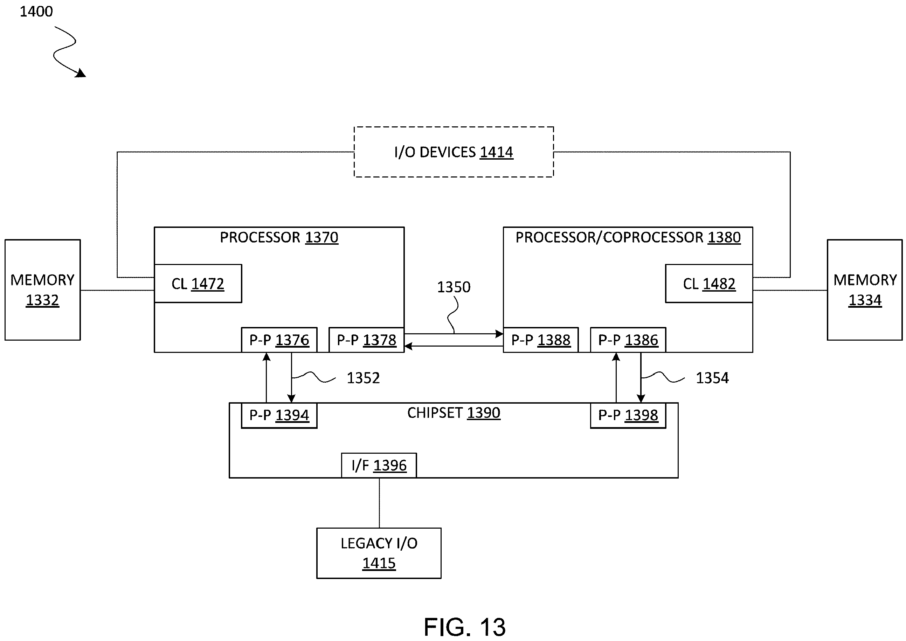

Referring now to FIG. 13, shown is a block diagram of a second more specific exemplary system 1400 in accordance with an embodiment of the present invention. Like elements in FIGs. 12 and 13 bear like reference numerals, and certain aspects of FIG. 12 have been omitted from FIG. 13 in order to avoid obscuring other aspects of FIG. 13.

FIG. 13 illustrates that the processors 1370, 1380 may include integrated memory and I/O control logic ("CL") 1472 and 1482, respectively. Thus, the CL 1472, 1482 include integrated memory controller units and include I/O control logic. FIG. 13 illustrates that not only are the memories 1332, 1334 coupled to the CL 1472, 1482, but also that I/O devices 1414 are also coupled to the control logic 1472, 1482. Legacy I/O devices 1415 are coupled to the chipset 1390.

Referring now to FIG. 14, shown is a block diagram of a SoC 1500 in accordance with an embodiment of the present invention. Similar elements in FIG. 10 bear like reference numerals. Also, dashed lined boxes are optional features on more advanced SoCs. In FIG. 14, an interconnect unit(s) 1502 is coupled to: an application processor 1510 which includes a set of one or more cores 1102A-N and shared cache unit(s) 1106; a system agent unit 1110; a bus controller unit(s) 1116; an integrated memory controller unit(s) 1114; a set or one or more coprocessors 1520 which may include integrated graphics logic, an image processor, an audio processor, and a video processor; an static random access memory (SRAM) unit 1530; a direct memory access (DMA) unit 1532; and a display unit 1540 for coupling to one or more external displays. In one embodiment, the coprocessor(s) 1520 include a special-purpose processor, such as, for example, a network or communication processor, compression engine, GPGPU, a high-throughput MIC processor, embedded processor, or the like.

Embodiments of the mechanisms disclosed herein may be implemented in hardware, software, firmware, or a combination of such implementation approaches. Embodiments of the invention may be implemented as computer programs or program code executing on programmable systems comprising at least one processor, a storage system (including volatile and non-volatile memory and/or storage elements), at least one input device, and at least one output device.

Program code, such as code 1330 illustrated in FIG. 12, may be applied to input instructions to perform the functions described herein and generate output information. The output information may be applied to one or more output devices, in known fashion. For purposes of this application, a processing system includes any system that has a processor, such as, for example; a digital signal processor (DSP), a microcontroller, an application specific integrated circuit (ASIC), or a microprocessor.

The program code may be implemented in a high level procedural or object oriented programming language to communicate with a processing system. The program code may also be implemented in assembly or machine language, if desired. In fact, the mechanisms described herein are not limited in scope to any particular programming language. In any case, the language may be a compiled or interpreted language.

One or more aspects of at least one embodiment may be implemented by representative instructions stored on a machine-readable medium which represents various logic within the processor, which when read by a machine causes the machine to fabricate logic to perform the techniques described herein. Such representations, known as "IP cores" may be stored on a tangible, machine readable medium and supplied to various customers or manufacturing facilities to load into the fabrication machines that actually make the logic or processor.

Such machine-readable storage media may include, without limitation, non-transitory, tangible arrangements of articles manufactured or formed by a machine or device, including storage media such as hard disks, any other type of disk including floppy disks, optical disks, compact disk read-only memories (CD-ROMs), compact disk rewritable's (CD-RWs), and magneto-optical disks, semiconductor devices such as read-only memories (ROMs), random access memories (RAMs) such as dynamic random access memories (DRAMs), static random access memories (SRAMs), erasable programmable read-only memories (EPROMs), flash memories, electrically erasable programmable read-only memories (EEPROMs), phase change memory (PCM), magnetic or optical cards, or any other type of media suitable for storing electronic instructions.

Accordingly, embodiments of the invention also include non-transitory, tangible machine-readable media containing instructions or containing design data, such as Hardware Description Language (HDL), which defines structures, circuits, apparatuses, processors and/or system features described herein. Such embodiments may also be referred to as program products.

### Emulation (including binary translation, code morphing, etc.)

In some cases, an instruction converter may be used to convert an instruction from a source instruction set to a target instruction set. For example, the instruction converter may translate (e.g., using static binary translation, dynamic binary translation including dynamic compilation), morph, emulate, or otherwise convert an instruction to one or more other instructions to be processed by the core. The instruction converter may be implemented in software, hardware, firmware, or a combination thereof. The instruction converter may be on processor, off processor, or part on and part off processor.

FIG. 15 is a block diagram contrasting the use of a software instruction converter to convert binary instructions in a source instruction set to binary instructions in a target instruction set according to embodiments of the invention. In the illustrated embodiment, the instruction converter is a software instruction converter, although alternatively the instruction converter may be implemented in software, firmware, hardware, or various combinations thereof. FIG. 15 shows a program in a high level language 1602 may be compiled using an x86 compiler 1604 to generate x86 binary code 1606 that may be natively executed by a processor with at least one x86 instruction set core 1616. The processor with at least one x86 instruction set core 1616 represents any processor that can perform substantially the same functions as an Intel processor with at least one x86 instruction set core by compatibly executing or otherwise processing (1) a substantial portion of the instruction set of the Intel x86 instruction set core or (2) object code versions of applications or other software targeted to run on an Intel processor with at least one x86 instruction set core, in order to achieve substantially the same result as an Intel processor with at least one x86 instruction set core. The x86 compiler 1604 represents a compiler that is operable to generate x86 binary code 1606 (e.g., object code) that can, with or without additional linkage processing, be executed on the processor with at least one x86 instruction set core 1616. Similarly, FIG. 15 shows the program in the high level language 1602 may be compiled using an alternative instruction set compiler 1608 to generate alternative instruction set binary code 1610 that may be natively executed by a processor without at least one x86 instruction set core 1614 (e.g., a processor with cores that execute the MIPS instruction set of MIPS Technologies of Sunnyvale, CA and/or that execute the ARM instruction set of ARM Holdings of Sunnyvale, CA). The instruction converter 1612 is used to convert the x86 binary code 1606 into code that may be natively executed by the processor without an x86 instruction set core 1614. This converted code is not likely to be the same as the alternative instruction set binary code 1610 because an instruction converter capable of this is difficult to make; however, the converted code will accomplish the general operation and be made up of instructions from the alternative instruction set. Thus, the instruction converter 1612 represents software, firmware, hardware, or a combination thereof that, through emulation, simulation or any other process, allows a processor or other electronic device that does not have an x86 instruction set processor or core to execute the x86 binary code 1606.

Techniques and architectures for matrix operations with multiple tiles per matrix dimension are described herein. In the above description, for purposes of explanation, numerous specific details are set forth in order to provide a thorough understanding of certain embodiments. It will be apparent, however, to one skilled in the art that certain embodiments can be practiced without these specific details. In other instances, structures and devices are shown in block diagram form in order to avoid obscuring the description

### Additional Notes and Examples

Example 1 includes an apparatus, comprising a systolic array to perform a matrix operation on two input tiles to produce an output tile result, and circuitry coupled to the systolic array to cause the systolic array to perform respective full matrix operations on more than one tile per matrix dimension in response to a single request.

Example 2 includes the apparatus of Example 1, wherein the single request indicates two or more input tiles per row dimension of a tile matrix.

Example 3 includes the apparatus of any of Examples 1 to 2, wherein the single request indicates two or more input tiles per column dimension of a tile matrix.

Example 4 includes the apparatus of any of Examples 1 to 3, wherein, in response to the single request, the circuitry is further to cause the systolic array to perform a first full matrix operation on a first tile and a second tile indicated by the single request, store a result of the first full matrix operation in a third tile indicated by the single request, perform a second full matrix operation on a fourth tile and a fifth tile indicated by the single request, and store a result of the second full matrix operation in a sixth tile indicated by the single request.

Example 5 includes the apparatus of Example 4, wherein, in response to the single request, the circuitry is further to cause the systolic array to perform a third full matrix operation on a seventh tile and an eighth tile indicated by the single request, store a result of the third full matrix operation in a ninth indicated by the single request, perform a fourth full matrix operation on a tenth tile and an eleventh tile indicated by the single request, and store a result of the fourth full matrix operation in a twelfth tile indicated by the single request.

Example 6 includes the apparatus of any of Examples 1 to 5, wherein the matrix operation includes a matrix multiplication operation.

Example 7 includes the apparatus of any of Examples 1 to 6, wherein the matrix operation includes a matrix fused multiply-add operation.

Example 8 includes an apparatus comprising decode circuitry to decode a single instruction, the single instruction to include respective fields for one or more source operands, one or more destination operands, and an opcode, the opcode to indicate execution circuitry is to perform respective full matrix operations on more than one tile per matrix dimension, and execution circuitry to execute the decoded instruction according to the opcode to retrieve tile information from respective locations indicated by the one or more source operands, to perform respective full matrix operations on more than one tile per matrix dimension indicated by the retrieved tile information, and to store respective results of the respective full matrix operations in respective tiles at respective locations indicated by the one or more destination operands.

Example 9 includes the apparatus of Example 8, wherein the retrieved tile information indicates two or more tiles per row dimension of a tile matrix.

Example 10 includes the apparatus of any of Examples 8 to 9, wherein the retrieved tile information indicates two or more tiles per column dimension of a tile matrix.

Example 11 includes the apparatus of any of Examples 8 to 10, wherein the execution circuitry is further to execute the decoded instruction according to the opcode to perform a first full matrix operation on a first tile indicated by the one or more source operands and a second tile indicated by the one or more source operands, store a result of the first full matrix operation in a third tile indicated by the one or more destination operands, perform a second full matrix operation on a fourth tile indicated by the one or more source operands and a fifth tile indicated by the one or more source operands, and store a result of the second full matrix operation in a sixth tile indicated by the one or more destination operands.

Example 12 includes the apparatus of Example 11, wherein the execution circuitry is further to execute the decoded instruction according to the opcode to perform a third full matrix operation on a seventh tile indicated by the one or more source operands and an eighth tile indicated by the one or more source operands, store a result of the third full matrix operation in a ninth tile indicated by the one or more destination operands, perform a fourth full matrix operation on a tenth tile indicated by the one or more source operands and an eleventh tile indicated by the one or more source operands, and store a result of the fourth full matrix operation in a twelfth tile indicated by the one or more destination operands.

Example 13 includes the apparatus of any of Examples 8 to 12, wherein the matrix operation includes a matrix multiplication operation.

Example 14 includes the apparatus of any of Examples 8 to 13, wherein the matrix operation includes a matrix fused multiply-add operation.

Example 15 includes a method, comprising fetching a single instruction having fields for an opcode, one or more destination operands, and one or more source operands, decoding the single instruction according to the opcode, retrieving data associated with the one or more source operands, scheduling execution of the instruction, and executing the decoded instruction to perform respective full matrix operations on more than one tile per matrix dimension indicated by the retrieved data associated with the one or more source operands and to store respective results of the respective full matrix operations in respective tiles indicated by the one or more destination operands.

Example 16 includes the method of Example 15, wherein the retrieved data associated with the one or more source operands indicates two or more tiles per row dimension of a tile matrix.

Example 17 includes the method of any of Examples 15 to 16, wherein the retrieved data associated with the one or more source operands indicates two or more tiles per column dimension of a tile matrix.

Example 18 includes the method of any of Examples 15 to 17, further comprising executing the decoded instruction to perform a first full matrix operation on a first tile indicated by the one or more source operands and a second tile indicated by the one or more source operands, store a result of the first full matrix operation in a third tile indicated by the one or more destination operands, perform a second full matrix operation on a fourth tile indicated by the one or more source operands and a fifth tile indicated by the one or more source operands, and store a result of the second full matrix operation in a sixth tile indicated by the one or more destination operands.

Example 19 includes the method of Example 18, further comprising executing the decoded instruction to perform a third full matrix operation on a seventh tile indicated by the one or more source operands and an eighth tile indicated by the one or more source operands, store a result of the third full matrix operation in a ninth tile indicated by the one or more destination operands, perform a fourth full matrix operation on a tenth tile indicated by the one or more source operands and an eleventh tile indicated by the one or more source operands, and store a result of the fourth full matrix operation in a twelfth tile indicated by the one or more destination operands.

Example 20 includes the method of any of Examples 15 to 19, wherein the matrix operation includes a matrix multiplication operation.

Example 21 includes the method of any of Examples 15 to 20, wherein the matrix operation includes a matrix fused multiply-add operation.

Example 22 includes a method, comprising providing a systolic array to perform a matrix operation on two input tiles to produce an output tile result, and performing respective full matrix operations with the systolic array on more than one tile per matrix dimension in response to a single request.

Example 23 includes the method of Example 22, wherein the single request indicates two or more input tiles per row dimension of a tile matrix.

Example 24 includes the method of any of Examples 22 to 23, wherein the single request indicates two or more input tiles per column dimension of a tile matrix.

Example 25 includes the method of any of Examples 22 to 24, further comprising, in response to the single request performing a first full matrix operation on a first tile and a second tile indicated by the single request, storing a result of the first full matrix operation in a third tile indicated by the single request, performing a second full matrix operation on a fourth tile and a fifth tile indicated by the single request, and storing a result of the second full matrix operation in a sixth tile indicated by the single request.

Example 26 includes the method of Example 25, further comprising, in response to the single request performing a third full matrix operation on a seventh tile and an eighth tile indicated by the single request, storing a result of the third full matrix operation in a ninth indicated by the single request, performing a fourth full matrix operation on a tenth tile and an eleventh tile indicated by the single request, and storing a result of the fourth full matrix operation in a twelfth tile indicated by the single request.

Example 27 includes the method of any of Examples 22 to 26, wherein the matrix operation includes a matrix multiplication operation.

Example 28 includes the method of any of Examples 22 to 27, wherein the matrix operation includes a matrix fused multiply-add operation.

Example 29 includes an apparatus, comprising means for performing a matrix operation on two input tiles to produce an output tile result on a systolic array, and means for performing respective full matrix operations with the systolic array on more than one tile per matrix dimension in response to a single request.

Example 30 includes the apparatus of Example 29, wherein the single request indicates two or more input tiles per row dimension of a tile matrix.

Example 31 includes the apparatus of any of Examples 29 to 30, wherein the single request indicates two or more input tiles per column dimension of a tile matrix.

Example 32 includes the apparatus of any of Examples 29 to 31, further comprising, in response to the single request means for performing a first full matrix operation on a first tile and a second tile indicated by the single request, means for storing a result of the first full matrix operation in a third tile indicated by the single request, means for performing a second full matrix operation on a fourth tile and a fifth tile indicated by the single request, and means for storing a result of the second full matrix operation in a sixth tile indicated by the single request.

Example 33 includes the apparatus of Example 32, further comprising, in response to the single request means for performing a third full matrix operation on a seventh tile and an eighth tile indicated by the single request, means for storing a result of the third full matrix operation in a ninth indicated by the single request, means for performing a fourth full matrix operation on a tenth tile and an eleventh tile indicated by the single request, and means for storing a result of the fourth full matrix operation in a twelfth tile indicated by the single request.

Example 34 includes the apparatus of any of Examples 29 to 33, wherein the matrix operation includes a matrix multiplication operation.

Example 35 includes the apparatus of any of Examples 29 to 34, wherein the matrix operation includes a matrix fused multiply-add operation.

Example 36 includes at least one non-transitory machine readable medium comprising a plurality of instructions that, in response to being executed on a computing device, cause the computing device to receive a single request to perform a matrix operation, where the single request indicates more than one tile per matrix dimension for the matrix operation, and perform respective full matrix operations with a systolic array on more than one tile per matrix dimension in response to a single request.

Example 37 includes the at least one non-transitory machine readable medium of Example 36, wherein the single request indicates two or more input tiles per row dimension of a tile matrix.

Example 38 includes the at least one non-transitory machine readable medium of any of Examples 36 to 37, wherein the single request indicates two or more input tiles per column dimension of a tile matrix.

Example 39 includes the at least one non-transitory machine readable medium of any of Examples 36 to 38, comprising a plurality of further instructions that, in response to being executed on the computing device, and in response to the single request, cause the computing device to perform a first full matrix operation on a first tile and a second tile indicated by the single request, store a result of the first full matrix operation in a third tile indicated by the single request, perform a second full matrix operation on a fourth tile and a fifth tile indicated by the single request, and store a result of the second full matrix operation in a sixth tile indicated by the single request.

Example 40 includes the at least one non-transitory machine readable medium of Example 39, comprising a plurality of further instructions that, in response to being executed on the computing device, and in response to the single request, cause the computing device to performing a third full matrix operation on a seventh tile and an eighth tile indicated by the single request, storing a result of the third full matrix operation in a ninth indicated by the single request, performing a fourth full matrix operation on a tenth tile and an eleventh tile indicated by the single request, and storing a result of the fourth full matrix operation in a twelfth tile indicated by the single request.

Example 41 includes the at least one non-transitory machine readable medium of any of Examples 36 to 40, wherein the matrix operation includes a matrix multiplication operation.

Example 42 includes the at least one non-transitory machine readable medium of any of Examples 36 to 41, wherein the matrix operation includes a matrix fused multiply-add operation.

Reference in the specification to "one embodiment" or "an embodiment" means that a particular feature, structure, or characteristic described in connection with the embodiment is included in at least one embodiment of the invention. The appearances of the phrase "in one embodiment" in various places in the specification are not necessarily all referring to the same embodiment.

Some portions of the detailed description herein are presented in terms of algorithms and symbolic representations of operations on data bits within a computer memory. These algorithmic descriptions and representations are the means used by those skilled in the computing arts to most effectively convey the substance of their work to others skilled in the art. An algorithm is here, and generally, conceived to be a self-consistent sequence of steps leading to a desired result. The steps are those requiring physical manipulations of physical quantities. Usually, though not necessarily, these quantities take the form of electrical or magnetic signals capable of being stored, transferred, combined, compared, and otherwise manipulated. It has proven convenient at times, principally for reasons of common usage, to refer to these signals as bits, values, elements, symbols, characters, terms, numbers, or the like.

It should be borne in mind, however, that all of these and similar terms are to be associated with the appropriate physical quantities and are merely convenient labels applied to these quantities. Unless specifically stated otherwise as apparent from the discussion herein, it is appreciated that throughout the description, discussions utilizing terms such as "processing" or "computing" or "calculating" or "determining" or "displaying" or the like, refer to the action and processes of a computer system, or similar electronic computing device, that manipulates and transforms data represented as physical (electronic) quantities within the computer system's registers and memories into other data similarly represented as physical quantities within the computer system memories or registers or other such information storage, transmission or display devices.

Certain embodiments also relate to apparatus for performing the operations herein. This apparatus may be specially constructed for the required purposes, or it may comprise a general purpose computer selectively activated or reconfigured by a computer program stored in the computer. Such a computer program may be stored in a computer readable storage medium, such as, but is not limited to, any type of disk including floppy disks, optical disks, CD-ROMs, and magnetic-optical disks, read-only memories (ROMs), random access memories (RAMs) such as dynamic RAM (DRAM), EPROMs, EEPROMs, magnetic or optical cards, or any type of media suitable for storing electronic instructions, and coupled to a computer system bus.

The algorithms and displays presented herein are not inherently related to any particular computer or other apparatus. Various general purpose systems may be used with programs in accordance with the teachings herein, or it may prove convenient to construct more specialized apparatus to perform the required method steps. The required structure for a variety of these systems will appear from the description herein. In addition, certain embodiments are not described with reference to any particular programming language. It will be appreciated that a variety of programming languages may be used to implement the teachings of such embodiments as described herein.

Besides what is described herein, various modifications may be made to the disclosed embodiments and implementations thereof without departing from their scope. Therefore, the illustrations and examples herein should be construed in an illustrative, and not a restrictive sense. The scope of the invention should be measured solely by reference to the claims that follow.

## Claims

1. An apparatus, comprising:
a systolic array to perform a matrix operation on two input tiles to produce an output tile result; and
circuitry coupled to the systolic array to cause the systolic array to perform respective full matrix operations on more than one tile per matrix dimension in response to a single request.

2. The apparatus of claim 1, wherein the single request indicates two or more input tiles per row dimension of a tile matrix.

3. The apparatus of any of claims 1 to 2, wherein the single request indicates two or more input tiles per column dimension of a tile matrix.

4. The apparatus of any of claims 1 to 3, wherein, in response to the single request, the circuitry is further to cause the systolic array to:
perform a first full matrix operation on a first tile and a second tile indicated by the single request;
store a result of the first full matrix operation in a third tile indicated by the single request;
perform a second full matrix operation on a fourth tile and a fifth tile indicated by the single request; and
store a result of the second full matrix operation in a sixth tile indicated by the single request.

5. The apparatus of claim 4, wherein, in response to the single request, the circuitry is further to cause the systolic array to:
perform a third full matrix operation on a seventh tile and an eighth tile indicated by the single request;
store a result of the third full matrix operation in a ninth indicated by the single request;
perform a fourth full matrix operation on a tenth tile and an eleventh tile indicated by the single request; and
store a result of the fourth full matrix operation in a twelfth tile indicated by the single request.

6. A method, comprising:
fetching a single instruction having fields for an opcode, one or more destination operands, and one or more source operands;
decoding the single instruction according to the opcode;
retrieving data associated with the one or more source operands;
scheduling execution of the instruction; and
executing the decoded instruction to perform respective full matrix operations on more than one tile per matrix dimension indicated by the retrieved data associated with the one or more source operands and to store respective results of the respective full matrix operations in respective tiles indicated by the one or more destination operands.

7. The method of claim 6, further comprising:
executing the decoded instruction to perform a first full matrix operation on a first tile indicated by the one or more source operands and a second tile indicated by the one or more source operands, store a result of the first full matrix operation in a third tile indicated by the one or more destination operands, perform a second full matrix operation on a fourth tile indicated by the one or more source operands and a fifth tile indicated by the one or more source operands, and store a result of the second full matrix operation in a sixth tile indicated by the one or more destination operands.

8. The method of claim 7, further comprising:
executing the decoded instruction to perform a third full matrix operation on a seventh tile indicated by the one or more source operands and an eighth tile indicated by the one or more source operands, store a result of the third full matrix operation in a ninth tile indicated by the one or more destination operands, perform a fourth full matrix operation on a tenth tile indicated by the one or more source operands and an eleventh tile indicated by the one or more source operands, and store a result of the fourth full matrix operation in a twelfth tile indicated by the one or more destination operands.

9. The method of any of claims 6 to 8, wherein the matrix operation includes a matrix multiplication operation.

10. The method of any of claims 6 to 9, wherein the matrix operation includes a matrix fused multiply-add operation.

11. At least one non-transitory machine readable medium comprising a plurality of instructions that, in response to being executed on a computing device, cause the computing device to:
receive a single request to perform a matrix operation, where the single request indicates more than one tile per matrix dimension for the matrix operation; and
perform respective full matrix operations with a systolic array on more than one tile per matrix dimension in response to a single request.

12. The at least one non-transitory machine readable medium of claim 11, wherein the single request indicates two or more input tiles per row dimension of a tile matrix.

13. The at least one non-transitory machine readable medium of any of claims 11 to 12, comprising a plurality of further instructions that, in response to being executed on the computing device, and in response to the single request, cause the computing device to:
perform a first full matrix operation on a first tile and a second tile indicated by the single request;
store a result of the first full matrix operation in a third tile indicated by the single request;
perform a second full matrix operation on a fourth tile and a fifth tile indicated by the single request; and
store a result of the second full matrix operation in a sixth tile indicated by the single request.

14. The at least one non-transitory machine readable medium of claim 13, comprising a plurality of further instructions that, in response to being executed on the computing device, and in response to the single request, cause the computing device to:
performing a third full matrix operation on a seventh tile and an eighth tile indicated by the single request;
storing a result of the third full matrix operation in a ninth indicated by the single request;
performing a fourth full matrix operation on a tenth tile and an eleventh tile indicated by the single request; and
storing a result of the fourth full matrix operation in a twelfth tile indicated by the single request.

15. The at least one non-transitory machine readable medium of any of claims 11 to 14, wherein the matrix operation includes a matrix fused multiply-add operation.
